# EUROPÄISCHE PATENTSCHRIFT

(11) **EP 3 878 672 B1**
(45) Veröffentlichungstag und Bekanntmachung des Hinweises auf die Patenterteilung: **01.05.2024**
(21) Anmeldenummer: 20162203.2
(22) Anmeldetag: 10.03.2020
(51) Int. Cl.: B60K 6/20, B60K 6/547, B60W 10/02, B60W 10/06, B60W 10/08, B60W 10/111, B60W 10/113, B60W 20/30, B60W 20/40, B60W 30/19, B60K 6/48, F16H 3/00

(54) **VERFAHREN ZUM BETREIBEN EINER HYBRID-ANTRIEBSBAUGRUPPE MIT SCHALTGETRIEBE UND E-MASCHINE**
METHOD FOR OPERATING A HYBRID DRIVE ASSEMBLY WITH TRANSMISSION AND ELECTRIC MACHINE
PROCÉDÉ DE FONCTIONNEMENT D'UN MODULE D'ENTRAÎNEMENT HYBRIDE POURVU DE BOÎTE DE VITESSES ET MACHINE ÉLECTRONIQUE

(43) Veröffentlichungstag der Anmeldung: 15.09.2021
(73) Patentinhaber: Getrag Ford Transmissions GmbH, 50735 Köln (DE)
(72) Erfinder: Nasdal, Roland, 50189 Elsdorf (DE)
(74) Vertreter: Wagner Albiger & Partner Patentanwälte mbB

(56) Entgegenhaltungen:
- DE-A1-102013 211 591
- US-A1- 2015 291 154
- US-A1- 2015 367 841

## Beschreibung

Die Erfindung betrifft ein Verfahren zum Betreiben einer Hybrid-Antriebsbaugruppe für ein Kraftfahrzeug, wobei die Hybrid-Antriebsbaugruppe ein Schaltgetriebe und eine E-Maschine aufweist.

Beispielsweise sind aus der DE 10 2010 030 568 A1, der EP 2 544 908 B1, der US 2015/0367841 A1 und der US 2015/0291154 A1 Hybrid-Antriebsbaugruppen mit Schaltgetriebe und E-Maschine für ein Kraftfahrzeug bekannt. Das Schaltgetriebe umfasst ein erstes Teilgetriebe mit einer ersten Eingangswelle, die sich über eine Kupplung mit einem Verbrennungsmotor des Kraftfahrzeugs koppeln lässt. Des Weiteren umfasst das Schaltgetriebe ein zweites Teilgetriebe mit einer zweiten Eingangswelle, die mit einem Rotor der E-Maschine gekoppelt ist. Über diverse schaltbare Hauptgänge des ersten Teilgetriebes lässt sich ein Drehmoment von dem Verbrennungsmotor auf den Abtrieb übertragen. Mit dem zweiten Teilgetriebe, welches einen Nebengang und einen weiteren Nebengang aufweist, kann ein Drehmoment von der E-Maschine auf den Abtrieb übertragen werden.

Zudem weist das Schaltgetriebe der EP 2 544 908 B1 eine Drehmomentübertragungseinheit in Form einer koaxial zur ersten Eingangswelle angeordneten Reibkupplung auf, durch die ein Drehmoment des Motors von der ersten Eingangswelle auf die zweite Eingangswelle übertragen werden kann. Durch diese Reibkupplung ist es möglich, ein Drehmoment der E-Maschine in das erste Teilgetriebe oder ein Drehmoment des Verbrennungsmotors in das zweite Teilgetriebe zu leiten. Beim Schaltgetriebe der US 2015/0291154 A1 ist eine Drehmomentübertragungseinheit in Form eines formschlüssigen Schaltelements vorgesehen, durch das Drehmoment von der ersten Eingangswelle auf die zweite Eingangswelle bzw. von der zweiten Eingangswelle auf die erste Eingangswelle übertragen werden kann. Beim Schaltgetriebe der DE 10 2010 030 568 A1 ist eine Reibkupplung zwischen zwei koaxial angeordneten Vorgelegewellen vorgesehen, wodurch ebenfalls die beiden Teilgetriebe wechselseitig mit dem Verbrennungsmotor oder der E-Maschine angetrieben werden können. Die US 2015/0367841 A1 weist eine solche Drehmomentübertragungseinheit nicht auf, um ein Drehmoment von der ersten Eingangswelle auf die zweite Eingangswelle bzw. von der zweiten Eingangswelle auf die erste Eingangswelle zu übertragen.

Beim Schalten von einem eingelegten Start-Hauptgang zu einem noch nicht eingelegten Ziel-Hauptgang schlägt die DE 10 2010 030 568 A1 vor, die beim Schalten auftretende Drehmomentlücke durch die E-Maschine aufzufüllen. Dabei wird beim Schaltvorgang im ersten Teilgetriebe ein Drehmoment der E-Maschine über das zweite Teilgetriebe auf den Abtrieb geleitet. Auch aus der EP 2 544 980 B1, der US 2015/0367841 A1 oder der US 2015/0291154 A1 ist bekannt, eine schaltungsbedingte Zugkraftunterbrechung durch eine vorübergehende Lastübernahme der E-Maschine zu vermeiden.

Eine vollständige Vermeidung der Zugkraftunterbrechung durch die E-Maschine ist ohne weiteres dann nicht möglich, wenn die Maximalleistung der E-Maschine kleiner als die Maximalleistung des Verbrennungsmotors ist. Wird beispielsweise das Kraftfahrzeug mit Hilfe des Verbrennungsmotors mit vergleichsweise großer Maximalleistung (beispielsweise 200 kW) stark beschleunigt, kann zwar beim Schalten zwischen zwei Hauptgängen die E-Maschine mit ihrer Maximalleistung (beispielsweise 60 kW) die auftretende Drehmomentlücke auffüllen, aber eben nur zum Teil. Die schaltungsbedingte Zugkraftunterbrechung ist daher für den Fahrer des Kraftfahrzeugs weiterhin deutlich spürbar.

Je näher die Maximalleistung der E-Maschine an die Maximalleistung des Verbrennungsmotors heranragt, desto eher kann die Drehmomentlücke beim Schalten vom Start-Hauptgang zum Ziel-Hauptgang vollständig gefüllt werden. Jedoch sind bei der Auswahl einer leistungsstarken E-Maschine aufgrund des begrenzten Bauraums im Kraftfahrzeug (Packaging) und des allgemeinen Kostendrucks Grenzen gesetzt.

Der Erfindung liegt daher die Aufgabe zu Grunde, ein Verfahren zum Betreiben einer Hybrid-Antriebsbaugruppe mit Schaltgetriebe und E-Maschine bereitzustellen, das einen hohen Fahrkomfort beim Fahren des Kraftfahrzeugs mit einer kostengünstig herstellbaren und kompakt bauenden Hybrid-Antriebsbaugruppe ermöglicht.

Die der Erfindung zu Grunde liegende Aufgabe wird mit der Merkmalskombination gemäß Anspruch 1 gelöst. Ausführungsbeispiele der Erfindung können den Unteransprüchen entnommen werden.

Das erfindungsgemäße Verfahren sieht vor, dass beim Schalten von dem eingelegten Start-Hauptgang zu dem Ziel-Hauptgang, die dem ersten Teilgetriebe zugeordnet sind, der Nebengang des zweiten Teilgetriebes als Stützgang genutzt wird, um die Drehmomentlücke beim Schaltvorgang aufzufüllen. Zum Auffüllen der Drehmomentlücke werden erfindungsgemäß der Verbrennungsmotor und die E-Maschine eingesetzt. Um das Drehmoment des Verbrennungsmotors nutzen zu können, wird eine Übertragungskapazität der Drehmomentübertragungseinheit bereitgestellt, so dass das Drehmoment des Verbrennungsmotors von dem ersten Teilgetriebe auf die zweite Teilgetriebe übertragen wird. Durch den Stützgang im zweiten Teilgetriebe treibt somit der Verbrennungsmotor den Abtrieb mit einem ersten Auffüllmoment an. Zudem wird ein Drehmoment durch die E-Maschine bereitgestellt, so dass über den Stützgang der Abtrieb durch ein zweites Auffüllmoment angetrieben wird. Erfindungsgemäß ist somit vorgesehen, dass der Verbrennungsmotor und die E-Maschine beim Schaltvorgang den Abtrieb gemeinsam antreiben und somit die Drehmomentlücke auffüllen.

Durch die Drehmomentübertragungseinheit mit entsprechender Übertragung des Drehmoments des Verbrennungsmotors auf das zweite Teilgetriebe kann das erste Teilgetriebe oder zumindest Teile davon lastfrei gestellt werden, so dass der Start-Hauptgang ausgelegt und der Ziel-Hauptgang eingelegt werden können. Nachdem der Ziel-Hauptgang eingelegt worden ist, werden die Übertragungskapazität der Drehmomentübertragungseinheit und das Drehmoment E-Maschine reduziert. Somit wird das von dem Verbrennungsmotor gelieferte Drehmoment wieder vollständig in das erste Teilgetriebe geleitet, wobei nun der Abtrieb über den neu eingelegten Ziel-Hauptgang angetrieben wird.

Durch das erfindungsgemäße Verfahren ist es möglich, auch bei einem leistungsstarken Verbrennungsmotor und bei einer weniger leistungsstarken E-Maschine die Drehmomentlücke beim Schalten von Hauptgängen im ersten Teilgetriebe vollständig aufzufüllen. Eine vollständige Auffüllung der Drehmomentlücke ist somit auch mit einer Hybrid-Antriebsbaugruppe möglich, deren E-Maschine eine wesentlich kleinere Maximalleistung als der Verbrennungsmotor hat. Das erfindungsgemäße Verfahren ermöglicht somit einen hohen Fahrkomfort auch bei Verwendung einer Hybrid-Antriebsbaugruppe mit einer vergleichsweise kleinen E-Maschine. Durch die kleinere E-Maschine benötigt die Hybrid-Antriebsbaugruppe wenig Bauraum.

Als Drehmomentübertragungseinheit kann eine Reibkupplung gewählt werden. Die Drehmomentübertragungseinheit bzw. die Reibkupplung kann koaxial zur ersten Eingangswelle angeordnet sein. Vorzugsweise sind die erste Eingangswelle als innere Welle oder Vollwelle und die zweite Eingangswelle als zur Vollwelle koaxialen Hohlwelle ausgebildet.

In einem Ausführungsbeispiel erfolgt die Übertragung des Drehmoments vom ersten Teilgetriebe zu dem zweiten Teilgetriebe dadurch, dass das Drehmoment des Motors unmittelbar von der ersten Eingangswelle über die Drehmomentübertragungseinheit bzw. über die Reibkupplung direkt auf die zweite Eingangswelle übertragbar ist. Es ist auch möglich, dass die Drehmomentübertragung zwischen einer Vorgelegewelle des ersten Teilgetriebes und einer Vorgelegewelle des zweiten Teilgetriebes erfolgt.

In einem Ausführungsbeispiel ist ein Übersetzungsverhältnis des Nebengangs kleiner als ein Übersetzungsverhältnis des Start-Hauptgangs und kleiner als ein Übersetzungsverhältnis des Ziel-Hauptgangs. Somit ist es möglich, dass die erste Eingangswelle bei eingelegtem Start-Hauptgang über die Reibkupplung Drehmoment auf die langsamer umlaufende zweite Eingangswelle abgibt und somit das in Richtung des Drehmomentflusses gesehen hinter der Reibkupplung liegende erste Teilgetriebe lastfrei gestellt wird. In diesem lastfrei gestellten ersten Teilgetriebe lassen sich der Start-Hauptgang auslegen und der Ziel-Hauptgang einlegen.

Das Übersetzungsverhältnis des Start-Hauptgangs (Ziel-Hauptgangs) ist dabei das Verhältnis der Drehzahl der ersten Eingangswelle zur Drehzahl des Abtriebs bei eingelegtem Start-Hauptgang (Ziel-Hauptgang). Das Übersetzungsverhältnis des Nebengangs soll dabei das Verhältnis der Drehzahl der zweiten Eingangswelle zur Drehzahl des Abtriebs sein, die sich bei Nutzung des Nebengangs einstellt. Als Abtrieb kann beispielsweise ein angetriebenes Differenzial bzw. die angetriebenen Räder des Kraftfahrzeugs definiert werden. Wenn im Folgenden auf ein Radmoment Bezug genommen wird, soll damit das am Abtrieb wirkende Drehmoment gemeint sein.

Das zweite Teilgetriebe kann wenigstens zwei schaltbare Nebengänge aufweisen, wobei in einem Ausführungsbeispiel der Nebengang als Stützgang ausgewählt werden kann, dessen Übersetzungsverhältnis näher an dem Übersetzungsverhältnis des Start-Hauptgangs und näher an dem Übersetzungsverhältnis des Ziel-Hauptgangs liegt. Betragen beispielsweise das Übersetzungsverhältnis des Start-Hauptgangs 4,0, das Übersetzungsverhältnis des Ziel-Hauptgangs 3,2, das Übersetzungsverhältnis eines der zwei schaltbare Nebengänge 3,0 und das Übersetzungsverhältnis des anderen schaltbaren Nebengangs 1,5, so wird gemäß diesem Ausführungsbeispiel der Nebengang mit dem Übersetzungsverhältnis 3,0 als Stützgang gewählt. Durch diesen Nebengang als Stützgang lässt sich über die Drehmomentübertragungseinheit ein größeres erstes Auffüllmoment an dem Abtrieb realisieren als bei dem anderen Nebengang. Das erste Auffüllmoment (gilt auch für das zweite Auffüllmoment) bezieht sich auf das Moment, das direkt am Abtrieb anliegt. Wenn beim Schaltvorgang über das erste Teilgetriebe kein Drehmoment übertragen wird, stellt die Summe aus dem ersten Auffüllmoment und dem zweiten Auffüllmoment das an dem Abtrieb wirkende Moment (Radmoment) dar.

Das Übersetzungsverhältnis des Ziel-Hauptgangs kann kleiner sein als das Übersetzungsverhältnis des Start-Hauptgangs. In diesem Fall stellt der Schaltvorgang vom Start-Hauptgang zum Ziel-Hauptgang ein Hochschalten dar. Ist das Übersetzungsverhältnis des Ziel-Hauptgangs größer als das Übersetzungsverhältnis des Start-Hauptgangs, kann von einem Runterschalten gesprochen werden.

In einer Zeitspanne zwischen einem Zeitpunkt T0 und einem Zeitpunkt T1 kann das erste Auffüllmoment und das zweite Auffüllmoment erhöht werden, bis eine Summe aus dem ersten Auffüllmoment und dem zweiten Auffüllmoment im Wesentlichen einem Start-Radmoment entspricht. Das Start-Radmoment soll dabei das Radmoment sein, das unmittelbar vor dem Schaltvorgang, also zum Zeitpunkt T0 oder kurz vor dem Zeitpunkt T0, bei eingelegtem Start-Hauptgang an dem Abtrieb anliegt. Das Radmoment ist vorzugsweise zwischen T0 und T1 konstant. Es setzt sich zusammen aus dem ansteigenden ersten Auffüllmoment und dem ansteigenden zweiten Auffüllmoment sowie dem kleiner werdenden Drehmoment, welches von der ersten Eingangswelle kommend durch das erste Teilgetriebe mit dem noch eingelegten Start-Hauptgang geleitet wird. Im Zeitpunkt T1 bzw. unmittelbar danach wird der Start-Hauptgang ausgelegt.

In einer Zeitspanne zwischen dem Zeitpunkt T1 und einem Zeitpunkt T2 kann die Drehzahl des Verbrennungsmotors auf eine Ziel-Drehzahl geführt werden. Dies kann dadurch erreicht werden, dass die Übertragungskapazität der Drehmomentübertragungseinheit erhöht wird, um den Verbrennungsmotor abzubremsen. Eine etwaige Gangschaltkupplung, die dem Ziel-Hauptgang zugeordnet sein kann, muss dadurch weniger Synchronisationsarbeit leisten bzw. kann ohne Synchron-Einheit als reine Klauenkupplung ausgeführt werden. Die Drehzahl des Verbrennungsmotors kann auch durch eine Reduzierung des Motormoments erreicht werden, wobei dann die Übertragungskapazität der Drehmomentübertragungseinheit auf einen konstanten Wert eingestellt werden kann.

Zwischen dem Zeitpunkt T1 und dem Zeitpunkt T2 kann die Summe aus dem ersten Auffüllmoment und dem zweiten Auffüllmoment auf ein Ziel-Radmoment geführt werden. Das Ziel-Radmoment kann dabei a) im Wesentlichen dem Start-Radmoment oder, was bevorzugt wird, b) dem Produkt aus Start-Radmoment und dem Quotient Übersetzungsverhältnisses des Ziel-Hauptgangs zu Übersetzungsverhältnisses des Start-Hauptgangs entsprechen. Das Ziel-Radmoment kann auch in dem Bereich zwischen den Werten gemäß a) und b) sein.

Im Fall b) entspricht dann das Ziel-Radmoment zum Zeitpunkt T2 dem Drehmoment, das an dem Abtrieb anliegt, wenn der Schaltvorgang beendet ist und das Drehmoment des Verbrennungsmotors vollständig über den nun eingelegten Ziel-Hauptgang durch das erste Teilgetriebe geleitet wird. Der Verlauf des Radmoments vom Start-Radmoment zum Zeitpunkt T1 bis zum Ziel-Radmoment zum Zeitpunkt T2 kann linear bzw. ohne Unstetigkeit verlaufen, so dass der Schaltvorgang hinsichtlich der Änderung des Radmoments vom Fahrer des Kraftfahrzeugs praktisch nicht wahrgenommen wird.

In einer Zeitspanne zwischen dem Zeitpunkt T2 und einem Zeitpunkt T3 kann die Übertragungskapazität der Kupplungseinheit und das Drehmoment der E-Maschine jeweils auf Null reduziert werden. Als Folge wird das Drehmoment des Verbrennungsmotors nun wieder vollständig in das erste Teilgetriebe mit dem dort eingelegten Ziel-Hauptgang geleitet.

In dem Ausführungsbeispiel, in dem das Übersetzungsverhältnis des Stützgangs im zweiten Teilgetriebe kleiner als das Übersetzungsverhältnis von Ziel-Hauptgangs und Start-Hauptgang ist, kompensiert vorzugsweise das Drehmoment der E-Maschine den durch die unterschiedlichen Übersetzungsverhältnisse von Start-Hauptgang und Stützgang bzw. von Ziel-Hauptgang und Stützgang bedingten Abfall des Radmoments. Zur Führung des Radmoments während des Schaltvorgangs können das Drehmoment der E-Maschine, die Übertragungskapazität der Drehmomentübertragungseinheit oder Drehmoment der E Maschine und Übertragungskapazität geregelt werden.

In einem Ausführungsbeispiel ist ein Maximum des ersten Auffüllmoments größer als ein Maximum des zweiten Auffüllmoments. Das Maximum des ersten Auffüllmoments kann dabei mindestens zweimal oder gar mindestens dreimal größer sein als das Maximum des zweiten Auffüllmoments. Entsprechend kann die maximale Übertragungskapazität der Drehmomentübertragungseinheit größer (oder mindestens zweimal oder gar mindestens dreimal größer) sein als das Drehmoment der E-Maschine, das an der zweiten Eingangswelle anliegt. Ein anderes Ausführungsbeispiel sieht vor, dass das Maximum des ersten Auffüllmoments kleiner als das Maximum des zweiten Auffüllmoments ist. Im letzteren Fall kann dann auf eine kleiner bauende Drehmomentübertragungseinheit zurückgegriffen werden.

Während des Schaltens vom Start-Hauptgang zum Ziel-Hauptgang kann das erste Auffüllmoment immer größer sein als das zweite Auffüllmoment, wenn nicht die Auffüllmomente gleich Null sind.

Anhand den in der Zeichnung dargestellten Ausführungsbeispielen soll die Erfindung näher erläutert werden. Es zeigen:
- Figur 1: ein Ausführungsbeispiel für eine Hybrid-Antriebsbaugruppe, mit der das erfindungsgemäße Verfahren durchgeführt werden kann;
- Figur 2: zeitliche Verläufe bei einem Zug-Hochschalten; und
- Figur 3: zeitliche Verläufe bei einem Zug-Runterschalten.

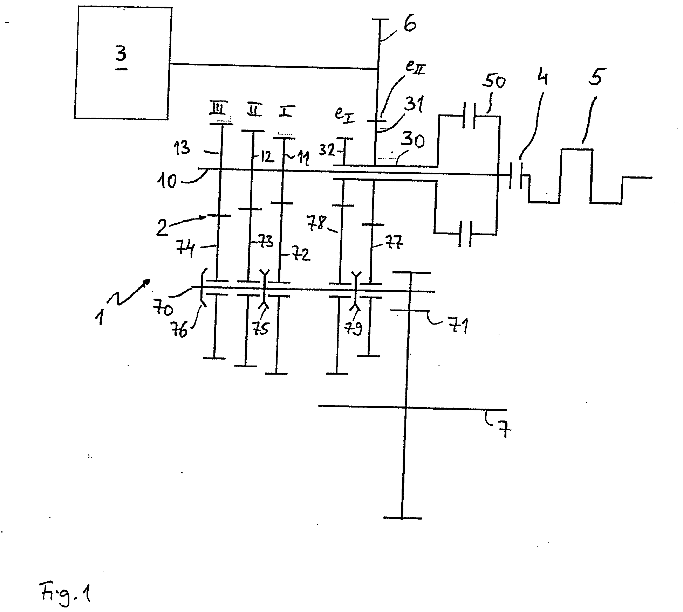

Figur 1 zeigt schematisch eine Hybrid-Antriebsbaugruppe, die in ihrer Gesamtheit mit 1 bezeichnet wird. Die Hybrid-Antriebsbaugruppe 1 weist ein Schaltgetriebe 2 und eine Elektro- oder E-Maschine 3 auf, die als Motor und Generator betrieben werden kann. Das Schaltgetriebe 2 weist eine als Vollwelle ausgebildete erste Eingangswelle 10 und eine als Hohlwelle ausgebildete zweite Eingangswelle 30 auf. Die erste Eingangswelle 10 ist über eine Kupplung 4 mit einem Verbrennungsmotor 5 eines Kraftfahrzeugs verbunden.

Vom Verbrennungsmotor 5 gesehen hinter der Kupplung 4 ist eine Drehmomentübertragungseinheit 50 in Form einer Reibkupplung vorgesehen, durch die die erste Eingangswelle 10 mit der zweiten Eingangswelle 30 verbunden werden kann. In dem hier dargestellten Ausführungsbeispiel ist die Reibkupplung 50 koaxial zu den Eingangswellen 10, 30 angeordnet. Wenn die Reibkupplung 50 geschlossen wird und somit eine gewisse Übertragungskapazität aufweist, lässt sich auch über die zweite Eingangswelle 30 das Drehmoment des Verbrennungsmotors 5 in das Schaltgetriebe 2 einleiten.

Ein Antriebszahnrad 6 der E-Maschine 3 kämmt mit einem Festrad 31 auf der zweiten Eingangswelle 30. Dadurch ist es möglich, dass das Drehmoment der E-Maschine 3 über das Antriebszahnrad 6, das Festrad 31 und über die zweite Eingangswelle 30 in das Schaltgetriebe 2 geleitet wird. In einer hier nicht dargestellten Ausführungsform kann die E-Maschine 3 bzw. deren Rotor koaxial zu den Eingangswellen 10, 30 angeordnet sein. Die E-Maschine 3 kann dabei die Reibkupplung 50 in radialer Richtung umschließen.

Das Schaltgetriebe 2 weist des Weiteren eine zu den Eingangswellen 10, 30 beabstandete und parallele Ausgangswelle 70 auf. Ein drehfest auf der Ausgangswelle 70 sitzendes Ritzel 71 steht im kämmenden Eingriff mit einem Abtrieb 7.

Auf der ersten Eingangswelle 10 sind drei Festräder 11, 12, 13 angeordnet, die mit auf der Ausgangswelle 70 angeordneten Losrädern 72, 73, 74 kämmen. Über Gangschaltkupplungen 75, 76 lassen sich die Losräder 72, 73, 74 drehfest mit der Ausgangswelle 70 verbinden. Ist beispielsweise die Gangschaltkupplung 76 geschaltet, ist ein dritter Hauptgang III des Schaltgetriebes 2 eingelegt. Bei geschlossener Kupplung 4 lässt sich somit über den Verbrennungsmotor 5 der Abtrieb 7 antreiben. Die Gangschaltkupplung 75 ist als Doppelgangsschaltkupplung ausgebildet, die entweder das Losrad 72 oder das Losrad 73 drehfest mit der Ausgangswelle 70 verbinden kann. Dadurch lässt sich ein erster Hauptgang I bzw. ein zweiter Hauptgang II des Schaltgetriebes 2 realisieren. Von den drei Hauptgängen I, II, III weist der erste Hauptgang I das größte Übersetzungsverhältnis (i_{I} = n₁₀/n₇, wenn erster Hauptgang I eingelegt ist).

Neben dem Festrad 31 ist noch ein weiteres Festrad 32 auf der zweiten Eingangswelle 30 angeordnet. Die Festräder 31, 32 kämmen mit Losrädern 77, 78, die sich über eine Doppelgangschaltkupplung 79 wahlweise mit der Ausgangswelle 70 drehfest verbinden lassen. Wenn die Doppelgangschaltkupplung 79 das Losrad 78 drehfest mit der Ausgangswelle 70 verbindet, ist ein erster (elektrischer) Nebengang ei eingelegt. Verbindet die Doppelgangschaltkupplung 79 hingegen das Losrad 77 drehfest mit der Ausgangswelle 70, ist ein zweiter Nebengang e_{II} eingelegt. Zu beachten ist, dass das Übersetzungsverhältnis des zweiten Nebengangs e_{II} (i_{eII} = n₃₀/n₇) kleiner ist als alle Übersetzungsverhältnisse der Hauptgänge I, II und III. Die Hauptgänge I, II und III sowie die erste Eingangswelle 10 können einem ersten Teilgetriebe, die Nebengänge ei und en sowie die zweite Eingangswelle 30 können einem zweiten Teilgetriebe des Schaltgetriebes 2 zugeordnet werden.

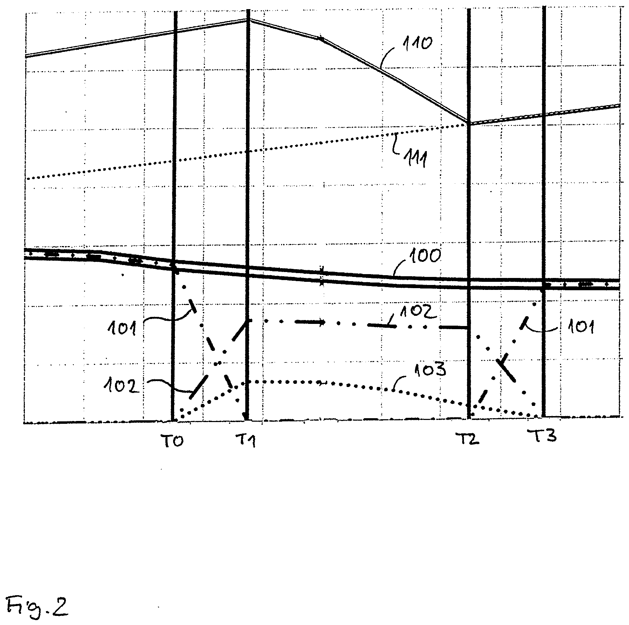

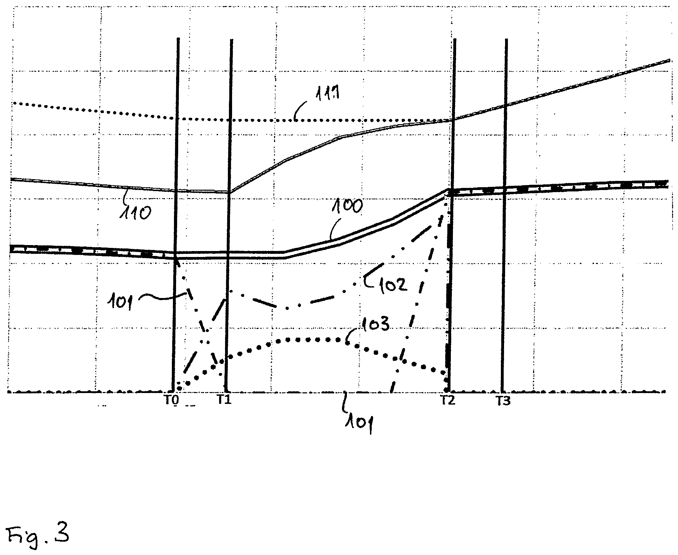

Anhand der Verläufe gemäß der Figuren 2 und 3 soll das erfindungsgemäße Verfahren erläutert werden. Bezug wird dabei genommen auf die Hybrid-Antriebsbaugruppe 1 und auf die mit ihr zusammenwirkenden Bauteile der Figur 1.

Figur 2 zeigt schematisch verschiedene zeitliche Drehmomentverläufe, wenn von dem eingelegten zweiten Hauptgang II in den dritten Hauptgang III gewechselt werden soll. Mit 100 ist ein zeitlicher Verlauf des antreibenden resultierenden Drehmoments am Abtrieb 7 bezeichnet. Dieses resultierende Drehmoment wird im folgenden Radmoment genannt. Das Radmoment 100 ist die Summe aus verschiedenen Drehmomenten: ein Antriebsmoment 101, das von dem Verbrennungsmotor 5 stammt und durch das erste Teilgetriebe, also mittels einer der Hauptgänge I, II oder III, zum Abtrieb 7 geleitet wird; ein erstes Auffüllmoment 102, das von dem Verbrennungsmotor 5 über die Reibkupplung 50 und dem eingelegten zweiten Nebengang eₗₗ zum Abtrieb 7 gelangt; und ein zweites Auffüllmoment 103, dass von der E-Maschine 3 erzeugt wird und ebenfalls über den eingelegten zweiten Nebengang e_{II} zum Abtrieb 7 übertragen wird.

Des Weiteren zeigt Figur 2 einen Drehzahlverlauf 110 des Verbrennungsmotors 5 (Motordrehzahl 110) sowie den Verlauf einer Ziel-Drehzahl 111 des dritten Hauptgangs III. Vor einem Zeitpunkt T0 fährt das Kraftfahrzeug mit eingelegtem zweiten Start-Hauptgang II und wird leicht beschleunigt, was an dem Anstieg der Motordrehzahl 110 vor dem Zeitpunkt T0 abzulesen ist. Am Zeitpunkt T0 erfolgt das Signal zum Gangwechsel in den dritten Hauptgang III. Dafür wird in einer Zeitspanne zwischen dem Zeitpunkt T0 und einem Zeitpunkt T1 die Reibkupplung 50 geschlossen, so dass diese im Schlupfbetrieb eine Übertragungskapazität aufbaut. Da das Übersetzungsverhältnis des eingelegten Nebengangs eₗₗ kleiner ist als das Übersetzungsverhältnis des zweiten eingelegten Hauptgang II, wird das zuvor durch das erste Teilgetriebe geleitete Drehmoment abgezogen und nun über das zweite Teilgetriebe geleitet. Entsprechend reduziert sich das Antriebsmoment 101 zwischen T0 und T1 bis zum Wert Null. Zusätzlich zum größer werdenden ersten Auffüllmoment 102 liefert gleichzeitig auch die E-Maschine 3 ein elektrisches Drehmoment, aus dem am Abtrieb 7 das zweite Auffüllmoment 103 resultiert. Unter der Annahme, dass das vom Motor 5 erzeugte Drehmoment zwischen T0 und T1 konstant bleibt, entspricht das erste Auffüllmoment 102 zum Zeitpunkt T1 dem Produkt aus Antriebsdrehmoment 101 zum Zeitpunkt T0 und dem Verhältnis der Übersetzungsverhältnisse i_{eII} / i_{II}. Das zweite durch die E-Maschine verursachte Auffüllmoment 103 dient dazu, die verbleibende Drehmomentlücke (1 - i_{eII} / i_{II}) zu schließen, um das Radmoment 100 konstant bzw. auf in etwa gleichem Niveau zu belassen.

Da die Reibkupplung 50 das Drehmoment des Verbrennungsmotors 5 zum Zeitpunkt T1 vollständig aufgenommen hat, ist das erste Teilgetriebe lastfrei gestellt, so dass in der nun folgenden Zeitspanne zwischen T1 und einem weiteren Zeitpunkt T2 der zweite Hauptgang II ausgelegt und der dritte Hauptgang III eingelegt werden kann. Zwischen T1 und T2 wird zudem die Motordrehzahl 110 an die Ziel-Drehzahl 111 angepasst. Nach erfolgter Anpassung der Motordrehzahl kann im Zeitpunkt T2 der dritte Hauptgang III eingelegt werden. Beispielsweise kann durch Änderung des ersten Auffüllmoments 102 bzw. durch Änderung der Übertragungskapazität der Reibkupplung 50 die Motordrehzahl 110 die Anpassung der Motordrehzahl 110 erfolgen, während durch die Regelung des zweiten Auffüllmoments bzw. durch das Drehmoment der E-Maschine das Radmoment 100 eingestellt wird. Zwischen T1 und T2 wird das Radmoment 100 nicht konstant gehalten, sondern leicht abgesenkt, bis es bei T2 ein Ziel-Drehmoment erreicht.

In der Zeitspanne zwischen dem Zeitpunkt T2 und einen Zeitpunkt T3 werden die Reibkupplung 50 geöffnet und das Drehmoment der E-Maschine runtergefahren, so dass die Summe der Auffüllmomente 102, 103 zu Null wird. Das gesamte Drehmoment des Verbrennungsmotors 5 führt nun wieder, wie vor dem Zeitpunkt T0, über das erste Teilgetriebe, nun jedoch über den eingelegten Ziel-Hauptgang III. Das Radmoment im Zeitpunkt T3 bzw. das Ziel-Radmoment kann dabei dem Produkt aus Ziel-Radmonent (Radmoment zum Zeitpunkt TO) und dem Quotient der Übersetzungsverhältnisse i_{III} / i_{II} entsprechen.

In Figur 3 werden die diversen Verläufe gezeigt, wenn von dem dritten Hauptgang III in den zweiten Hauptgang II runtergeschaltet wird. Die einzelnen Verläufe weisen die gleichen Bezugszeichen wie die entsprechenden Verläufe in Figur 2 auf. Zwischen T0 und T1 werden die Reibkupplung 50 im Schlupfbetrieb geschlossen und das Drehmoment der E-Maschine 3 erhöht. Als Folge liegt am Abtrieb 7 zum Zeitpunkt T1 das erste Auffüllmoment 102 und das zweite Auffüllmoment 103 an, deren Summe dem Radmoment 100 im Zeitpunkt T1 entspricht.

Zwischen T1 und T2 erfolgen das Auslegen des dritten Hauptgangs III und das Einlegen des zweiten Hauptgangs II sowie die Regelung der Motordrehzahl 110 auf die Ziel-Drehzahl 110, die nun größer als die Motordrehzahl 110 ist. Sobald der zweite Hauptgang II eingelegt ist, öffnet im Zeitpunkt T2 schlagartig die Reibkupplung 50, wodurch das Antriebsmoment 101, welches nun wieder auf dem ersten Teilgetriebe mit dem eingelegten zweiten Hauptgang II stammt, ebenfalls schlagartig ansteigt. In Figur 3 ist der Anstieg des Antriebsmoments 101 der Übersicht halber als Rampe dargestellt. Der Anstieg ist jedoch eher einen vertikalen Verlauf im Zeitpunkt T2.

Über das Drehmoment der E-Maschine 3, aus dem dann das zweite Auffüllmoment 103 resultiert, lässt sich der Verlauf des Radmoments 100 einstellen. Das Radmoment 100 wird zwischen T1 ausgehend vom Start-Radmoment (siehe Radmoment 100 im Zeitpunkt TO) auf das Ziel-Radmoment (siehe Radmoment 100 im Zeitpunkt T2) erhöht.

### Bezugszeichenliste

- 1: Hybrid-Antriebsbaugruppe
- 2: Schaltgetriebe
- 3: E-Maschine
- 4: Kupplung
- 5: Verbrennnungsmotor
- 6: Antriebszahnrad
- 7: Abtrieb
- 10: erste Eingangswelle
- 11: Festrad
- 12: Festrad
- 13: Festrad
- 30: zweite Eingangswelle
- 31: Festrad
- 32: Festrad
- 50: Drehmomentübertragungseinheit / Reibkupplung
- 70: Ausgangswelle
- 71: Ritzel
- 72: Losrad
- 73: Losrad
- 74: Losrad
- 75: Gangschaltkupplung / Doppelgangschaltkupplung
- 76: Gangschaltkupplung
- 77: Losrad
- 78: Losrad
- 79: Doppelgangschaltkupplung
- 100: Radmoment / Drehmoment am Abtrieb
- 101: Antriebsmoment
- 102: erstes Auffüllmoment
- 103: zweites Auffüllmoment
- I, II, III: Hauptgänge
- e_{I}, e_{II}: Nebengänge

## Patentansprüche

1. Verfahren zum Betreiben einer Hybrid-Antriebsbaugruppe (1) für ein Kraftfahrzeug mit einer E-Maschine (3) und einem Schaltgetriebe (2), wobei das Schaltgetriebe (2) aufweist:
- eine erstes Teilgetriebe mit einer ersten Eingangswelle (10), die sich mit einem Verbrennungsmotor (5) des Kraftfahrzeugs koppeln lässt, sowie mit mehreren Hauptgänge (I, II, III), um ein Drehmoment von dem Verbrennungsmotor (5) auf einen Abtrieb (7) des Kraftfahrzeugs zu übertragen
- ein zweites Teilgetriebe mit einer zweiten Eingangswelle (30), die mit einem Rotor der E-Maschine (3) gekoppelt ist, sowie mit wenigstens einen Nebengang (e_{I}, e_{II}), um ein Drehmoment von der E-Maschine (3) auf den Abtrieb (7) zu übertragen;
- eine Drehmomentübertragungseinheit (50), durch die ein Drehmoment des Verbrennungsmotors (5) von dem ersten Teilgetriebe auf das zweite Teilgetriebe übertragbar ist,
wobei, um von einem eingelegten Start-Hauptgang zu einem Ziel-Hauptgang zu schalten, das Verfahren die folgenden Schritte umfasst:
a) Nutzung des Nebengangs (ei, en) als ein Stützgang, um eine Drehmomentlücke während des Schaltens vom Start-Hauptgang zum Ziel-Hauptgang aufzufüllen;
b) Bereitstellung einer Übertragungskapazität der Drehmomentübertragungseinheit (50), sodass ein Drehmoment des Verbrennungsmotors (5) von dem ersten Teilgetriebe auf das zweite Teilgetriebe übertragen wird, wobei durch den Stützgang der Abtrieb (7) durch ein erstes Auffüllmoment (102) angetrieben wird;
c) Bereitstellung eines Drehmoments durch die E-Maschine (3), sodass über den Stützgang der Abtrieb (7) durch ein zweites Auffüllmoment (103) angetrieben wird;
d) Auslegen des Start-Hauptgangs und Einlegen des Ziel-Hauptgangs;
e) Reduzierung der Übertragungskapazität der Kupplungseinheit (50) und Reduzierung des Drehmoments der E-Maschine (3) nach Einlegen des Ziel-Hauptgangs.

2. Verfahren nach Anspruch 1, **dadurch gekennzeichnet, dass** als Drehmomentübertragungseinheit (50) eine Reibkupplung gewählt wird, die koaxial zur ersten Eingangswelle (10) und zweiten Eingangswelle (30) angeordnet ist.

3. Verfahren nach Anspruch 1 oder 2, **dadurch gekennzeichnet, dass** das Übersetzungsverhältnis des Nebengangs (e_{II}) kleiner als ein Übersetzungsverhältnis des Start-Hauptgangs und kleiner als ein Übersetzungsverhältnis des Ziel-Hauptgangs ist.

4. Verfahren nach einem der Ansprüche 1 bis 3, **dadurch gekennzeichnet, dass** das zweite Teilgetriebe wenigstens zwei schaltbare Nebengänge (ei; e_{II}) aufweist, wobei als Stützgang der Nebengang ausgewählt wird, dessen Übersetzungsverhältnis näher an dem Übersetzungsverhältnis des Start-Hauptgangs und näher an dem Übersetzungsverhältnis des Ziel-Hauptgangs liegt.

5. Verfahren nach einem der Ansprüche 1 bis 4, **dadurch gekennzeichnet, dass** in einer Zeitspanne zwischen einem Zeitpunkt T0 und einem Zeitpunkt T1 das erste Auffüllmoment (102) und das zweite Auffüllmoment (103) erhöht werden, bis eine Summe aus dem ersten Auffüllmoment (102) und dem zweiten Auffüllmoment (103) im Wesentlichen einem Start-Radmoment.

6. Verfahren nach einem der Ansprüche 1 bis 5, **dadurch gekennzeichnet, dass** in einer Zeitspanne zwischen dem Zeitpunkt T1 und einem Zeitpunkt T2 die Drehzahl des Motors (110) auf eine Ziel-Drehzahl (111) geführt wird.

7. Verfahren nach Anspruch 6, **dadurch gekennzeichnet, dass** zwischen dem Zeitpunkt T1 und dem Zeitpunkt T2 die Summe von erstem Auffüllmoment (102) und zweitem Auffüllmoment (103) auf ein Ziel-Radmoment geführt wird.

8. Verfahren nach Anspruch 7, **dadurch gekennzeichnet, dass** das Ziel-Radmoment dem Produkt aus Start-Radmoment und aus dem Quotient Übersetzungsverhältnisses des Ziel-Hauptgangs / Übersetzungsverhältnis des Start-Hauptgangs entspricht.

9. Verfahren nach einem der Ansprüche 6 bis 8, **dadurch gekennzeichnet, dass** in einer Zeitspanne zwischen dem Zeitpunkt T2 und einem Zeitpunkt T3 die Übertragungskapazität der Drehmomentübertragungseinheit (50) und das Drehmoment der E-Maschine (3) jeweils reduziert werden.

10. Verfahren nach einem der Ansprüche 1 bis 9, **dadurch gekennzeichnet, dass** ein Maximum des ersten Auffüllmoments (102) größer ist als ein Maximum des zweiten Auffüllmoments (103).

11. Verfahren nach einem der Ansprüche 1 bis 10, **dadurch gekennzeichnet, dass** während des Schaltens vom Start-Hauptgang zum Ziel-Hauptgang das erste Auffüllmoment (102) immer größer als das zweite Auffüllmoment (103) ist, soweit die Auffüllmomente (102, 103) von null verschieden sind.

## Claims

1. Method for operating a hybrid drive assembly (1) for a motor vehicle with an electric motor (3) and a manual gearbox (2), wherein the manual gearbox (2) has:
- a first sub-gearbox with a first input shaft (10), which can be coupled to an internal combustion engine (5) of the motor vehicle, and with a plurality of main gears (I, II, III) for transmitting torque from the internal combustion engine (5) to an output (7) of the motor vehicle,
- a second sub-gearbox with a second input shaft (30), which is coupled to a rotor of the electric motor (3), and with at least one auxiliary gear (e_{I}, e_{II}) for transmitting torque from the electric motor (3) to the output (7);
- a torque transmission unit (50), by means of which torque from the internal combustion engine (5) can be transmitted from the first sub-gearbox to the second sub-gearbox,
wherein in order to shift from an engaged starting main gear to a target main gear, the method comprises the following steps:
a) using the auxiliary gear (e_{I}, e_{II}) as a support gear for filling a torque gap during the shift from the starting main gear to the target main gear;
b) providing a transmission capacity of the torque transmission unit (50), so that torque from the internal combustion engine (5) is transmitted from the first sub-gearbox to the second sub-gearbox, wherein the output (7) is driven by the support gear by a first boost torque (102);
c) providing torque from the electric motor (3), so that the output (7) is driven via the support gear by a second boost torque (103);
d) disengaging the starting main gear and engaging the target main gear;
e) reducing the transmission capacity of the clutch unit (50) and reducing the torque of the electric motor (3) after engaging the target main gear.

2. Method according to claim 1, **characterized in that** a friction clutch is selected as torque transmission unit (50), which friction clutch is arranged coaxially to the first input shaft (10) and second input shaft (30).

3. Method according to claim 1 or 2, **characterized in that** the transmission ratio of the auxiliary gear(s) is smaller than a transmission ratio of the starting main gear and smaller than a transmission ratio of the target main gear.

4. Method according to any one of claims 1 to 3, **characterized in that** the second sub-gearbox has at least two shiftable auxiliary gears (e_{I}, e_{II}), wherein the auxiliary gear whose transmission ratio is closer to the transmission ratio of the starting main gear and closer to the transmission ratio of the target main gear is selected as the support gear.

5. Method according to any one of claims 1 to 4, **characterized in that** in a time interval between time point T0 and time point T1 the first boost torque (102) and the second boost torque (103) are increased to a sum of the first boost torque (102) and the second boost torque (103) substantially a starting wheel torque.

6. Method according to any one of claims 1 to 5, **characterized in that** in a time interval between time point T1 and time point T2 the rotational speed of the motor (110) is brought to a target rotational speed (111).

7. Method according to claim 6, **characterized in that** between time point T1 and time point T2 the sum of the first boost torque (102) and second boost torque (103) is brought to a target wheel torque.

8. Method according to claim 7, **characterized in that** the target wheel torque corresponds to the product of the start wheel torque and the quotient of the transmission ratio of the target main gear/transmission ratio of the starting main gear.

9. Method according to any one of claims 6 to 8, **characterized in that** in a time interval between time point T2 and time point T3 the transmission capacity of the torque transmission unit (50) and the torque of the electric motor (3) are reduced respectively.

10. Method according to any one of claims 1 to 9, **characterized in that** a maximum of the first boost torque (102) is greater than a maximum of the second boost torque (103).

11. Method according to any one of claims 1 to 10, **characterized in that** when shifting from the starting main gear to the target main gear, the first boost torque (102) is always greater than the second boost torque (103), insofar as the boost torques (102, 103) are different from zero.

## Revendications

1. Procédé de fonctionnement d'un module d'entraînement hybride (1) destiné à un véhicule automobile avec un moteur électrique (3) et une boîte de vitesses (2), dans lequel la boîte de vitesses (2) présente :
- un premier engrenage partiel avec un premier arbre d'entrée (10) qui peut être couplé à un moteur à combustion interne (5) du véhicule automobile, ainsi qu'avec plusieurs vitesses principales (I, II, III) pour transmettre un couple de rotation du moteur à combustion interne (5) à une sortie (7) du véhicule automobile
- un second engrenage partiel avec un second arbre d'entrée (30) qui est couplé à un rotor du moteur électrique (3), ainsi qu'avec au moins une vitesse auxiliaire (e_{I}, e_{II}) pour transmettre un couple de rotation du moteur électrique (3) à la sortie (7) ;
- une unité de transmission de couple de rotation (50) via laquelle un couple de rotation du moteur à combustion interne (5) peut être transmis du premier engrenage partiel au second engrenage partiel,
dans lequel, pour passer d'une vitesse principale de départ à une vitesse principale cible, le procédé comprend les étapes suivantes :
a) utilisation de la vitesse auxiliaire (e_{I}, e_{II}) comme vitesse d'appui pour compenser un écart de couple de rotation pendant le passage de la vitesse principale de départ à la vitesse principale cible ;
b) fourniture d'une capacité de transmission de l'unité de transmission de couple de rotation (50), de sorte qu'un couple de rotation du moteur à combustion interne (5) est transmis du premier engrenage partiel au second engrenage partiel, dans lequel la sortie (7) est entraînée par un premier couple de remplissage (102) via la vitesse d'appui ;
c) fourniture d'un couple de rotation par le moteur électrique (3), de sorte que la sortie (7) est entraînée par un second couple de compensation (103) via la vitesse d'appui ;
d) désenclencher la vitesse principale de départ et enclencher la vitesse principale cible ;
e) réduire la capacité de transmission de l'unité de couplage (50) et réduire le couple de rotation du moteur électrique (3) après l'enclenchement de la vitesse principale cible.

2. Procédé selon la revendication 1, **caractérisé en ce qu'**un embrayage à friction est choisi comme unité de transmission de couple de rotation (50), embrayage qui est disposé de manière coaxiale par rapport au premier arbre d'entrée (10) et au second arbre d'entrée (30).

3. Procédé selon la revendication 1 ou 2, **caractérisé en ce que** le rapport de transmission du passage latéral (en) est inférieur à un rapport de transmission de la vitesse principale de départ et inférieur à un rapport de transmission de la vitesse principale cible.

4. Procédé selon l'une quelconque des revendications 1 à 3, **caractérisé en ce que** le second engrenage partiel présente au moins deux vitesses auxiliaires (e_{I}; en) commutables, dans lequel la vitesse auxiliaire est choisie comme vitesse d'appui, dont le rapport de transmission se trouve plus près du rapport de transmission de la vitesse principale de départ et plus près du rapport de transmission de la vitesse principale cible.

5. Procédé selon l'une quelconque des revendications 1 à 4, **caractérisé en ce que**, lors d'un intervalle de temps entre un instant T0 et un instant T1, le premier couple de compensation (102) et le second couple de compensation (103) sont augmentés jusqu'à une somme du premier couple de compensation (102) et du second couple de compensation (103), sensiblement un couple de départ.

6. Procédé selon l'une quelconque des revendications 1 à 5, **caractérisé en ce que**, lors d'un intervalle de temps entre l'instant T1 et un instant T2, le régime du moteur (110) est amené à une vitesse de rotation cible (111).

7. Procédé selon la revendication 6, **caractérisé en ce qu'**entre l'instant T1 et l'instant T2, la somme du premier couple de compensation (102) et le second couple de compensation (103) est amenée à une vitesse de rotation cible.

8. Procédé selon la revendication 7, **caractérisé en ce que** la vitesse de rotation cible correspond au produit de la vitesse de rotation de départ et du quotient du rapport de transmission de la vitesse principale cible/rapport de transmission de la vitesse principale de départ.

9. Procédé selon l'une quelconque des revendications 6 à 8, **caractérisé en ce que** lors d'un intervalle de temps entre l'instant T2 et un instant T3, la capacité de transmission de l'unité de transmission de couple de rotation (50) et le couple de rotation du moteur électrique (3) sont respectivement réduits.

10. Procédé selon l'une quelconque des revendications 1 à 9, **caractérisé en ce qu'**un maximum du premier couple de compensation (102) est supérieur à un maximum du second couple de compensation (103).

11. Procédé selon l'une quelconque des revendications 1 à 10, **caractérisé en ce que** pendant le passage de la vitesse principale de départ à la vitesse principale, cible le premier couple de compensation (102) est toujours supérieur au second couple de compensation (103), pour autant que les couples de compensation (102, 103) soient différents de zéro.
